Europäisches Patentamt

European Patent Office

Office européen des brevets

(19)

(11) Veröffentlichungsnummer: **0 078 043**
**B1**

(12) **EUROPÄISCHE PATENTSCHRIFT**

(45) Veröffentlichungstag der Patentschrift:
**17.04.85**

(21) Anmeldenummer: **82109823.3**

(22) Anmeldetag: **25.10.82**

(51) Int. Cl.⁴: **C 08 F 14/06**, C 08 F 291/02,
C 08 F 214/06

(54) Verfahren zur Herstellung von Vinylchlorid-Polymermassen und deren Verwendung.

(30) Prioritat: **26.10.81 DE 3142420**

(43) Veröffentlichungstag der Anmeldung:
**04.05.83 Patentblatt 83/18**

(45) Bekanntmachung des Hinweises auf die Patenterteilung:
**17.04.85 Patentblatt 85/16**

(84) Benannte Vertragsstaaten:
**BE CH DE FR GB IT LI NL SE**

(56) Entgegenhaltungen:
**DE - A - 1 925 292**

**CHEMICAL ABSTRACTS, Band 94, Nr. 13, Juni 1981, Seite 21, Nr. 209489b, Columbus, Ohio, USA**

(73) Patentinhaber: **WACKER-CHEMIE GMBH, Prinzregentenstrasse 22, D-8000 München 22 (DE)**

(72) Erfinder: **Kleine, Willi, Dr. Dipl.-Chem., Gaussstrasse 4, D-8263 Burghausen (DE)**
Erfinder: **Hanzalik, Josef, Ludwig-Thoma-Strasse 12, D-8263 Burghausen (DE)**
Erfinder: **Frey, Werner, Dr. Dipl.-Chem., Marktlerstrasse 82, D-8263 Burghausen (DE)**

EP 0 078 043 B1

BUNDESDRUCKEREI BERLIN

**0 078 043**

## Beschreibung

Die Erfindung betrifft ein verbessertes Verfahren zur Herstellung von Polymermassen auf der Basis von Vinylchloridhomopolymeren, sowie Copolymeren und Pfropfcopolymeren mit einem überwiegenden Anteil von Vinylchlorideinheiten in wäßrigem Medium, die ohne weitere Zwischenbehandlung wie Mischen, Verkneten oder Granulieren für die weitere Verarbeitung, wie beispielsweise die Extrusion von Rohren oder Profilen eingesetzt werden können. Die genannten Homo-, Co- und Pfropfcopolymeren werden im weiteren unter dem Begriff Polyvinylchlorid oder PVC zusammengefaßt.

PVC läßt sich gewöhnlich insbesondere bei der Hartverarbeitung nur befriedigend verarbeiten, wenn vor der Formgebung Zusatzstoffe, wie z. B. Thermo- und Lichtstabilisatoren, Gleitmittel, Verarbeitungshilfsstoffe, Modifikatoren, Füllstoffe, Pigmente usw., eingebracht werden. Diese Zusatzstoffe können dabei flüssig oder auch fest sein.

Üblicherweise werden solche Zusätze dem PVC nach der Isolierung des Polymeren aus dem Polymerisationsmedium in einem besonderen Zwischenschritt oder aber während des abschließenden Verarbeitungsprozesses zum fertigen Formkörper zugesetzt, beispielsweise durch Vermischen oder Verkneten im allgemeinen bei höherer Temperatur. Im Hinblick auf die dabei auftretende Wärmebelastung des Polymeren und aus Gründen der Wirtschaftlichkeit (hoher Durchsatz pro Zeiteinheit) ist es jedoch wichtig und wünschenswert, daß die Misch- bzw. Knetzeit möglichst kurz gehalten wird. Besonders vorteilhaft wäre daher ein Verfahren, in dem dieser gesonderte Verarbeitungsschritt wegfallen könnte, also der Zusatz der Additive bereits bei der Polymerisation erfolgte.

Folgende Randbedingungen müssen jedoch erfüllt sein, wenn die Polymerisation in Anwesenheit von Zusatzstoffen durchgeführt werden soll:

— Keine Störung der Polymerisationsreaktion durch die Additive (keine Inhibition),
— Keine Störung des Kornbildungsprozesses durch die Additive.
— Zusätze müssen möglichst quantitativ vom Polymeren aufgenommen werden. Falls dies nur unvollständig erfolgt, ergeben sich Nachteile wirtschaftlicher Art, da dann die Einsatzmengen der Zusatzstoffe entsprechend erhöht werden müssen, wie auch solche bezüglich des Umweltschutzes, da die nicht vom Polymeren gebundenen Zusatzstoffe mit dem Abwasser und der Abluft ausgetragen werden und damit eine Kontaminierung der Umgebung mit z. B. Schwermetallverbindungen verursachen, bzw. zusätzliche kosten- und arbeitsintensive Anstrengungen unternommen werden müssen, das Abwasser und die Abluft davon zu reinigen.
— Die Zusätze müssen weitgehendst gleichmäßig im Polymeren verteilt sein. Liegt keine gleichmäßige Verteilung vor, so resultiert daraus eine ungleichmäßige Produktbeschaffenheit, z. B. vielfach eine schlechte Verarbeitbarkeit und schlechtere Thermostabilität und beim Einsatz von Pigmenten, eine ungleichmäßige Färbung der Fertigartikel.

Aufgrund der Kenntnisse der Nachteile des nachträglichen Einmischens von Zusatzstoffen in das PVC wurden bereits öfters Verfahren vorgeschlagen, bei denen die gewünschten Zusätze vor oder während der Polymerisation dem Reaktionsgemisch zugesetzt werden sollen.

So wurde in der US-PS 3 468 828 (& DE-OS 1 620 898) vorgeschlagen, die Zusätze vor oder während des Polymerisationsschrittes in Form einer wäßrigen Dispersion zuzusetzen. Dies erfolgt jedoch in der Weise, daß die Zusätze mit Hilfe oderflächenaktiver Substanzen in die sauer gestellte Monomerphase eingearbeitet werden müssen. Die Verteilung der Zusätze genügt aber nicht den heute gültigen Anforderungen, überdies findet sich ein beachtlicher Teil davon nach Abtrennung des Polymeren im Abwasser wieder.

In der US-PS 3 862 066 (& DE-OS 2 225 427) wird ein weiteres solches Verfahren beschrieben, bei dem Vinylchlorid (VC) in Gegenwart von Zusatzstoffen polymerisiert wird. Wesentlich ist für das dort beschriebene Verfahren, daß die Polymerisation bei einem gewünschten Umsetzungsgrad durch Zusatz von Schnellstopmitteln abgebrochen wird, um vorbestimmbare Mengenverhältnisse bezüglich Zusatzstoff und Polymer zu erzielen. Auch nach diesem Verfahren ist die Aufnahme der Zusatzstoffe noch nicht befriedigend, insbesondere dann nicht, wenn Schlagzähmodifizierungsmittel mitverwendet werden.

Den selben Nachteil besitzt auch das Verfahren gemäß der GB-PS 1 499 675 (& DE-OS 2 400 611), bei dem vor der Polymerisation Ethylen-Vinylacetat-Copolymeres in VC gelöst wird.

Es wurde nun ein gegenüber dem Stand der Technik verbessertes Verfahren zur Herstellung von verarbeitungsfertigen (Compound-)Polymermassen auf der Basis von Polymeren des Vinylchlorids gefunden, bei dem die für die sogenannte Hartverarbeitung von PVC zu Formkörpern üblicherweise eingesetzten flüssigen und/oder festen Zusatzstoffe, die z. B. in der US-PS 3 862 066 bzw. DE-OS 2 225 427 (worauf hier zur Straffung der Beschreibung Bezug genommen wird) umfassend aufgezählt werden, soweit sie nicht hemmend auf die Polymerisation wirken, in den dort angegebenen üblichen Mengen vorzugsweise bereits vor oder vorzugsweise während des ersten Teils der Polymerisation dem Reaktionsgemisch zugesetzt werden. Überraschenderweise können nach dem im folgenden näher beschriebenen erfindungsgemäßen Verfahren auf einfache und gut reproduzierbare Weise gleichmäßigere Produkte bezüglich der quantitativen Zusammensetzung und bezüglich der Verteilung der Zusatzstoffe mit ausgezeichneten Verarbeitungseigenschaften und sehr guter Thermostabilität erzielt werden, da die eingangs genannten Randbedingungen überraschend gut erfüllt werden. Die vorstehend genannten Nachteile treten nicht mehr in nennenswerter Weise auf. Als Nebeneffekt können die bisher notwendigen aufwendigen Umweltschutzmaßnahmen vereinfacht werden, ohne daß die Umweltbelastung erhöht wird, da die Zusatzstoffe wesentlich besser als bisher vom Polymeren aufgenommen werden.

Gegenstand der Erfindung ist ein verbessertes Verfahren zur Herstellung von verarbeitungsfertigen Polymermassen (Compounds) auf der Basis von PVC durch Polymerisation von VC oder im wesentlichen VC-enthaltenden Monomergemischen in wäßriger Suspension mittels monomerlöslichem Radikalinitiator in Gegenwart von Suspensionsstabilisator, sowie Verarbeitungshilfe, Polymerstabilisator, Gleit-(oder Schmier-)mittel, Füllstoff, Pigment und/oder Modifizierungsmittel, das dadurch gekennzeichnet ist, daß 50 bis 90, vorzugsweise 60 bis 80 Gew.-% des Monomeren(gemisches) in der wäßrigen Phase in Gegenwart von Suspensionsstabilisator und mindestens einem der weiteren Zusatzstoffe bei einem Druck, der bei oder über dem Sättigungsdruck der Monomerphase liegt, bis zu einem Druckabfall von 0,1 bis 1 bar unterhalb dieses Sättigungsdruckes polymerisiert und dann unter Dosierung von 10 bis 50, vorzugsweise 20 bis 40 Gew.-% des Monomeren(gemisches) im Maße seines Verbrauches zu Ende polymerisiert und die Masse isoliert wird.

Nach dem erfindungsgemäßen Verfahren kann insbesondere VC allein oder aber VC im Gemisch mit bis zu 20 Gew.-%, vorzugsweise bis zu 5 Gew.-%, mindestens eines mit VC copolymerisierbaren ethylenisch ungesättigten Monomeren ggf. in Gegenwart von Polymeren polymerisiert werden. Auf diese Weise können Homo-, Co- und Pfropfcopolymerisate des VC hergestellt werden, die bereits die zur Weiterverarbeitung notwendigen Zusätze (Additive) enthalten.

Beispielsweise können mit VC ethylenisch ungesättigte Ester wie Vinylester nicht ethylenisch ungesättigter, insbesondere gesättigter gerad- oder verzweigtkettiger oder cyclischer Carbonsäuren mit vorzugsweise 1 bis ca. 20 C-Atomen, Mono- und/oder Diester $\alpha,\beta$-ungesättiger Mono- und/oder Dicarbonsäuren mit 3 bzw. 4 bis ca. 20 C-Atomen mit gesättigten $C_1$- bis $C_{20}$-Alkoholen, $\alpha$-Olefine mit 2 bis ca. 4 C-Atomen, Vinylketone und Alkylvinylether und Vinylidenhalogenide eingesetzt werden. Als spezielle Monomere seien genannt: Vinylacetat, Vinylpropionat, -butyrat, -ethylhexanoat, -laurat, -stearat, Versatic®-säurevinylester, Methyl-, Ethyl-, Propyl-, Butyl-, Lauryl(meth)acrylat, Mono- und/ oder Diester des Methanols, Ethanols, Propanols, Butanols, Decanols, Undecanols, Dodecanols, Cetylalkohols und Stearylalkohols mit Fumar-, Malein- und/oder Itakonsäure, sowie Ethylen. Besondere Vorteile bietet das erfindungsgemäße Verfahren, wenn die Polymerisation in Gegenwart von an sich bekannten Schlagzähmodifizierungsmitteln, wie Ethylen-Vinylacetat(EVAC)-Copolymeren, insbesondere mit 30 bis 75 Gew.-% Vinylacetateinheiten, Polyacrylatpolymeren, EPDM-, MBS- und/oder ABS-Kautschuken, die ggf. als Latex vor und/oder auch während der Polymerisation zugegeben und/oder dosiert werden können, durchgeführt wird. Bevorzugt werden die EVAC- und Polyalkylacrylat(co)polymeren, die z. B. in Form handelsüblicher Produkte eingesetzt werden können. Insbesondere bei Mitverwendung dieser Modifizierharze und -kautschuke werden bei den vorbekannten Verfahren Produkte erhalten, die die Zusatzstoffe unzureichend aufnehmen, so daß ein großer Teil davon ins Abwasser gerät, außerdem ist dort auch die Verteilung dieser Zusatzstoffe im Polymeren unbefriedigend.

Wie bereits ausgeführt, wird das erfindungsgemäße Verfahren so durchgeführt, daß ein Teil des Monomeren(gemisches) zunächst in der wäßrigen Suspension bei einem Druck, der mindestens dem Sättigungsdruck, vorzugsweise dem Sättigungsdruck der Monomerenphase entspricht, bis zu einem Druckabfall auf 0,1 bis 1 bar unterhalb dieses Sättigungsdruckes polymerisiert wird. Dabei liegt das Monomer/Wassergewichtsverhältnis vorzugsweise bei 1 : 1 bis 2,5 : 1. Es kann aber auch davon abgewichen werden, z. B. wenn ein Modifizierharz in Form eines Latex zudosiert wird. Bei dieser ersten Polymerisationsphase können die Bestandteile wie 50 bis 90 Gew.-% der Gesamtmonomerenmenge, Suspensionshilfsstoffe, Radikalinitiatoren und Additive, die für die Compoundierung zugesetzt werden, ganz oder teilweise vorgelegt werden. Es können auch einzelne dieser Substanzen vorgelegt und die anderen dosiert werden. Weiterhin ist es möglich, alle zu dosieren. Vorzugsweise werden jedoch zumindest die Suspensionshilfsstoffe zumindest teilweise vorgelegt und die Zugabe der Zusatzstoffe abgeschlossen, bevor der Druckabfall eintritt.

Monomerlösliche Zusatzstoffe, wie z. B. Gleitmittel, epoxidierte Öle und Weichmacher können auch gelöst (vorzugsweise bis 10 Gew.-%, bezogen auf das Monomere) im Monomeren(gemisch) eingesetzt werden.

Für das erfindungsgemäße Verfahren einsetzbare Suspensionshilfsstoffe (-stabilisatoren) sind primäre Schutzkolloide, beispielsweise Zellulosederivate, Polyvinylalkohole und deren Gemische. Als vorzugsweise weitgehend wasserlösliche Zellulosederivate sind zu nennen: Alkyl-, insbesondere Methylzellulosen, Hydroxyalkyl-, insbesondere Hydroxyethylzellulosen, Alkyl-hydroxyalkyl-, insbesondere Methyl-hydroxypropylzellulosen und Carboxyalkyl-, insbesondere Carboxymethylzellulosen. Als Polyvinylalkohole sind insbesondere teilverseifte wasserlösliche Polyvinylacetate mit Hydrolysegraden von etwa 70 bis 95 Mol-%, entsprechend Verseifungszahlen von etwa 60 bis etwa 300 und mittleren, meist viskosimetrisch gemessenen Polymerisationsgraden von etwa 500 bis etwa 2500 zu nennen. Diese Schutzkolloide werden vorzugsweise in Mengen von 0,01 bis 10, besonders vorzugsweise 0,01 bis 5, insbesondere 0,05 bis 1 Gew.-%, bezogen auf Monomere(s), eingesetzt.

3

**0 078 043**

Sofern die erfindungsgemäß hergestellten PVC-Compounds gemäß einer bevorzugten Ausführungsform schlagzäh ausgerüstet sein sollen und dafür mindestens eines der bereits genannten Modifizierungsmittel, insbesondere die EVAC- und Acrylat(co)polymeren, in das Polymerisationsgemisch eingebracht wird, wird vorzugsweise zusätzlich zu den genannten wasserlöslichen Schutzkolloiden noch ein weiteres gemeinhin als sekundär bezeichnetes Schutzkolloid vorzugsweise in Mengen von 0,01 bis 1, insbesondere 0,1 bis 0,7 Gew.-%, bezogen auf Monomere(s), mitverwendet. Es kann selbstverständlich auch bei der Herstellung nicht schlagzäh modifizierten PVC's vorteilhaft mitverwendet werden. Als Beispiel dafür sind teilverseifte Polyvinylacetate (Polyvinylalkohole, PVAL) mit Verseifungszahlen von 380 bis 500 und mittleren, meist vikosimetrisch gemessenen Polymerisationsgraden von etwa 500 bis etwa 2500 zu nennen. Statt dessen können auch nichtionogene Tenside, vorzugsweise solche mit HLB-Werten (vgl. Griffin, J. Soc. Cosmetic Chemists 1 [1950] 311, ibid. 5 [1954] 249) von 4 bis 17 und insbesondere wenig oder gar nicht wasserlösliche, in den gleichen Mengen, wie für die sekundären Schutzkolloide angegeben, eingesetzt werden. Als Beispiele seien nur Sorbitanmonoester, z. B. -monolaurat, genannt. Das Weglassen dieser sekundären Suspensionsstabilisatoren führt insbesondere bei Einsatz der Schlagzähmodifier während der ersten Phase vielfach zu unporösen Polymerteilchen, die die Zusatzstoffe schlecht aufnehmen und schließlich auch schalige PVC-Teilchen ergeben. Diese sind jedoch wegen ihrer schlechten Verarbeitbarkeit unerwünscht.

Die Polymerisation wird mit monomerlöslichen Radikalinitiatoren eingeleitet, z. B. mit peroxidischen oder Azo-Verbindungen oder Gemischen solcher Verbindungen. Als Beispiele für peroxidische Verbindungen seien Dialkyl-, Diacyl-, Diarylperoxide, Peroxidcarbonate und Perester genannt, wie Di-tert.-Butylperoxid, Dibenzoylperoxid, Dilauroylperoxid, Acetylbenzoylperoxid, Dicumylperoxid, Dicetylperoxidicarbonat, tert.-Butylperpivalat oder -perneodecanoat, sowie als Azo-Verbindung Azobis(isobutyronitril). Die verwendete Menge und Art der Initiatoren richtet sich nach der gewünschten Reaktionstemperatur (vorzugsweise 30 bis 70°C, insbesondere 50 bis 65°C) und damit nach dem beabsichtigten K-Wert (nach Fikentscher, vgl. Deutsche Industrienorm DIN 53 726), der vorzugsweise bei 40 bis 80, insbesondere 55 bis 70 liegt.

Die weiteren Zusatzstoffe, die in Compounds üblicherweise verwendet und deshalb im erfindungsgemäßen Verfahren schon zumindest teilweise, vorzugsweise ganz mitverwendet werden, seien im folgenden genannt. Zunächst sei aber darauf verwiesen, daß selbstverständlich solche Zusatzstoffe, die die Polymerisationsgeschwindigkeit merklich senken oder die Polymerisation gar beeinträchtigen, vorteilhafterweise erst nach Ende der Polymerisation zugesetzt werden. Als Beispiele für solche Verbindungen sei hier nur auf Stabilisatoren oder Antioxidantien verwiesen, die auch als Schnellstopmittel wirken (vgl. dazu z. B. DE-OS 2 225 427). Oftmals erübrigt sich so ein Zusatz allerdings, da vielfach auf andere gleich gut wirkende Substanzen ohne diese nachteilige Eigenschaft ausgewichen werden kann. Beispiele üblicher Zusatzmittel (Additive) für die Compoundierung sind bereits in der DE-OS 2 225 427 genannt. Sie können auch hier im erfindungsgemäßen Verfahren in den üblichen dort genannten Mengen eingesetzt werden, sofern die obengenannte Bedingung erfüllt ist. Unter Bezugnahme auf diese bereits genannte Druckschrift sollte es sich daher erübrigen, einzelne solcher geeigneten Zusatzstoffe zu nennen und die vorliegende Beschreibung damit aufzublähen. Es seien daher nur die einzelnen Arten solcher Additive und, soweit sie von den Angaben in der genannten Druckschrift abweichen, auch die Mengen genannt (%-Angaben beziehen sich jeweils auf das Gewicht der Monomerenphase):

Gleit- oder Schmiermittel, vorzugsweise in Mengen von 0,01 bis 5, besonders vorzugsweise 0,4 bis 3, insbesondere 0,5 bis 1,5 Gew.-%.

Pigmente bis 30, vorzugsweise 0,1 bis 20, insbesondere 2 bis 5 Gew.-%.

Stabilisatoren, vorzugsweise 0,1 bis 8, besonders vorzugsweise 0,5 bis 5, insbesondere 1 bis 3 Gew.-%.

Füllstoffe, wie Kreide, $SiO_2$, vorzugsweise 0,5 bis 25 Gew.-%, für bestimmte Zwecke (z. B. Fußbodenbeläge) bis 100 Gew.-%.

Verarbeitungshilfsmittel

Polymermodifizierungsmittel (Modifier)

Üblicherweise wird mindestens einer dieser Zusatzstoffe verwendet. Die Modifier werden in einer bevorzugten Ausführungsform zumindest teilweise, insbesondere ganz, vorgelegt.

Substanzen, die als Zusatzstoffe (Additive) eingesetzt werden sollen, aber die Polymerisationsreaktion nachteilig beeinflussen, z. B. Antioxidantien, wie Bisphenol A oder bestimmte (z. B. Licht-)Stabilisatoren, werden vorzugsweise nach Ende der Polymerisation in das Compound eingebracht, z. B. vor der Abtrennung des Wassers oder vorzugsweise sogar erst danach.

Wie bereits ausgeführt, wird der mindestens eine Zusatzstoff vorzugsweise so zugegeben, daß eine Dosierung vor dem Druckabfall beendet ist, insbesondere so, daß die Dosierung in der ersten Hälfte der ersten Reaktionsphase abgeschlossen ist. Besonders bevorzugt ist, die Zusatzstoffe vorzulegen.

Sobald der Druck im Reaktor, üblicherweise ein mit Rührer und Kühl- bzw. Heizeinrichtung ausgerüsteter Autoklav, unter den Sättigungsdampfdruck der Monomerenphase (insbesondere des Vinylchlorids) fällt, ist die flüssige Phase des Reaktionsgemisches weitgehend frei von flüssigem Monomeren,

4

insbesondere frei von flüssigem VC. Nun kann prinzipiell mit der Monomer- insbesondere der VC-Dosierung begonnen werden. Aus praktischen Gründen wird damit aber gewartet, bis der Druck etwa 0,1 bis 1 bar unterhalb des Sättigungsdruckes liegt. Das Monomere(ngemisch) wird so dosiert, daß der Druck stets unterhalb des Sättigungsdruckes bleibt, vorzugsweise bleibt er während der gesamten Dosierungsdauer im angegebenen Bereich.

Gleichzeitig mit den Monomeren kann auch noch Initiator und ggf. Wasser dosiert werden. Diese Substanzen können auch noch nach Ende der Monomerdosierung eingesetzt werden, z. B. bis der gewünschte Umsatz erreicht ist. Die Polymeren können anschließend in für Suspensionsprodukte üblicher Weise isoliert werden, z. B. durch Zentrifugieren und/oder Filtration.

Durch das erfindungsgemäße Verfahren kann in vorteilhafter Weise die Autoklavenauslastung verbessert werden, da Suspensionen hohen Festgehaltes und hoher Schüttdichte hergestellt werden können. Außerdem werden die Additive praktisch vollständig vom Polymeren aufgenommen, so daß die Abwasser- und Abluftreinigung vereinfacht ist. Überraschenderweise besitzen die Produkte, die erfindungsgemäß hergestellt worden sind, eine gegenüber bekannten Produkten neben besserer Verarbeitbarkeit auch erhöhte Thermostabilität und vielfach bessere Oberflächenbeschaffenheit der daraus hergestellten Formkörper, z. B. Extrudate, insbesondere extrudierten Profile oder Rohre. Dies ist wohl, ohne darauf beschränkt sein zu müssen, auf die gleichmäßigere Verteilung der Zusätze und daraus folgend darauf zurückzuführen, daß sich weitere Misch- und Knetprozesse erübrigen.

Außerdem zeichnen sich die Polymercompounds durch sehr einheitliche Teilchengrößenverteilung im Bereich von vorzugsweise 40 bis vorzugsweise 250 µm aus.

Durch das Verfahren lassen sich PVC-Compounds erzeugen, deren Schüttdichte je nach Art und Menge der Zusatzstoffe (z. B. gemessen nach DIN 53 468) von der des reinen PVC bis z. B. bei einem Gewichtsverhältnis der Additive zum PVC von 1 : 1 auf ca. 850 g/l beträgt, vorzugsweise 550 bis 700 g/l.

Die folgenden Beispiele dienen der weiteren Erläuterung der Erfindung. Die Mengen- und Prozentangaben verstehen sich stets als Gewichtsmengen und Gewichtsprozent, sofern nichts anderes angegeben ist. Die Ergebnisse der Versuche sind am Schluß in Form einer Tabelle zusammengefaßt. Dabei sind angegeben:

Rückstand
 der Zusatzstoffe im abgeschleuderten Reaktionswasser (g/l), bestimmt durch Filtration des Zentrifugenwassers
Cl-Wert:
 Bestimmung des Chloridgehaltes des Compounds durch peroxidischen Aufschluß und Titration (Gew.-%); reines PVC: 56,8 Gew.-%
Schüttdichte nach DIN 53 468 (g/l)
Porosität: Quecksilberporosität
Stabilität:
 Walzstabilität, Walzentemperatur 190° C, Probenahme im 5-Minuten-Abstand, Zeitdauer bis zur Versprödung, erste Verfärbungen traten im allgemeinen etwa 10 Minuten eher auf
Oberflächenqualität eines extrudierten Profils
 + + + völlig glatte, einwandfreie Oberfläche
 + + gute Oberfläche mit lediglich etwas ungleichmäßigem Glanz
 + ausreichende, leicht rauhe Oberfläche noch ohne Ausblühungen (plate out)
 — nicht zufriedenstellende, sehr ungleichmäßige und rauhe Oberfläche

## Beispiel 1 (Vergleich)

In einem 380-l-Edelstahlautoklaven wurden 100 Teile entionisiertes Wasser, 4,75 Teile eines EVAC-Copolymeren (Levapren® 450 N der Firma Bayer AG, Leverkusen), 0,3 Teile Methylzellulose (in Form einer 2%igen wäßrigen Lösung), 0,03 Teile Dicyclohexylperoxidicarbonat, 1 Teil epoxidiertes Sojabohnenöl sowie 1 Teil eines Wachsesters vorgelegt. Dieser Vorlage wurden nun unter Rühren 7 Teile Kreide, 4 Teile $TiO_2$ und 3 Teile Barium-Cadmium-myristinat, dispergiert in 50 Teilen Wasser, zugefügt. Nach mehrmaligem Evakuieren und Spülen mit Stickstoff wurden 105 Teile VC eingeleitet und das EVAC-Copolymere durch zweistündiges Rühren bei Raumtemperatur in VC gelöst. Danach wurde auf 57° C aufgeheizt und bei dieser Temperatur bis zu einem Druckabfall von 1,5 bar polymerisiert. 30 Minuten nachdem 0,5 Teile Bisphenol A, gelöst in 3 Teilen Methanol, zugegeben worden waren, wurde der Autoklav entspannt, dann 2 Stunden bei 75°C auf 530 mbar zur Entfernung des restlichen VC evakuiert und schließlich abgekühlt.

Das PVC wurde abgeschleudert und getrocknet.

Im Schleuderwasser wurde ein hoher Rückstand an festen, nicht monomerenlöslichen Zusatzstoffen festgestellt. Die Verteilung der Zusatzstoffe im PVC war ungleichmäßig. Die metallhaltigen Zusatzstoffe befanden sich gemäß energiedispersiver Röntgenanalyse weitgehend an der Kornoberfläche.

**0 078 043**

## Beispiel 2

Beispiel 1 wurde dergestalt abgeändert, daß im Autoklaven 0,2 Teile Methylzellulose und 73 Teile VC vorgelegt wurden. Man polymerisierte bis zu einem Druckabfall von 0,5 bar und dosierte bei diesem Druck konstant 32 Teile VC nach. Nach Beendigung der VC-Dosierung wurde weiter polymerisiert, bis der Druck um 1,5 bar abfiel, und man verfuhr weiter wie im Beispiel 1.

Der Rückstand im Schleuderwasser war geringer als im Beispiel 1, die Verteilung der Zusatzstoffe im Polymer jedoch ebenfalls ungleichmäßig.

## Beispiel 3

Beispiel 1 wurde wiederholt mit dem Unterschied, daß 0,25 Teile Methylzellulose vorgelegt und 0,4 Teile eines Polyvinylalkohols mit einer Verseifungszahl von 410 nach der zweistündigen Levapren®-Lösephase zugefügt wurden. 84 Teile Vinylchlorid befanden sich in der Vorlage und 21 Teile VC wurden nach Druckabfall um 0,5 bar konstant bei diesem Druck nachdosiert. Die weitere Aufarbeitung erfolgte wie im Beispiel 1.

Es resultierte ein noch geringerer Rückstand im Schleuderwasser, die Zusatzstoffe waren gleichmäßig im Produkt dispergiert.

## Beispiel 4

Im Verfahren entsprechend Beispiel 3 wurden nur 0,21 Teile Methylzellulose und 0,35 Teile Polyvinylalkohol mit einer Verseifungszahl von 410 eingesetzt. 73 Teile Vinylchlorid wurden vorgelegt und 32 Teile dosiert.

Der Rückstand im Schleuderwasser verringerte sich nochmals, die Dispergierung der Zusatzstoffe im Produkt war gleichmäßig.

## Beispiel 5 (Vergleich)

Das Ethylen-Vinylacetat-Copolymere wurde in einem Versuch analog Beispiel 1 ersetzt durch 11 Teile einer 50gew.-%igen Polybutylacrylatdispersion, während die Menge und Art der Zusatzstoffe unverändert blieb. Als Schutzkolloid wurden 0,4 Teile Methylhydroxypropylzellulose (als 2gew.-%ige wäßrige Lösung), als Katalysator 0,04 Teile Dicetylperoxidicarbonat und 0,03 Teile Lauroylperoxid verwendet. Nach Evakuieren des Autoklaven wurden 100 Teile Vinylchlorid eingeleitet und darauf bei 57° C bis zu einem Druckabfall von 1,5 bar polymerisiert. Die Aufarbeitung erfolgte in üblicher Weise.

Im Schleuderwasser wurde ein hoher Rückstand gefunden, die Zusatzstoffe befanden sich praktisch nur an der Kornoberfläche, waren ungleichmäßig im Produkt verteilt.

## Beispiel 6

Beispiel 5 wurde wiederholt mit der Abänderung, daß 0,3 Teile Methylhydroxypropylzellulose und zusätzlich 0,3 Teile Sorbitanmonolaurat vorgelegt wurden. 70 Teile VC befanden sich in der Vorlage, 30 Teile wurden nach einem Druckabfall von 0,5 bar nachdosiert.

Im Schleuderwasser wurde wenig Rückstand festgestellt. Die Zusatzstoffe waren gut im Produkt verteilt.

## Beispiel 7

Im Autoklaven wurden 120 Teile Wasser, 0,2 Teile Polyvinylalkohol (Viskosität 5 mPas, gemessen in 4gew.-%iger wäßriger Lösung, Verseifungszahl 270) und 0,03 Teile Methylzellulose (sowohl PVAL als auch Methylzellulose wurden als 2gew.-%ige wäßrige Lösung eingesetzt), 0,04 Teile Dilauroylperoxid und 0,05 Teile Dicetylperoxidicarbonat, 0,8 Teile Wachsester sowie 0,8 Teile epoxidiertes Sojabohnenöl vorgelegt. Dazu kamen unter Rühren 6 Teile Kreide, 3 Teile Titandioxid und 2,5 Teile Barium-Cadmiummyristinat, dispergiert in 40 Teilen Wasser. Nach dem Evakuieren und Spülen mit Stickstoff wurden 70 Teile Vinylchlorid eingeleitet und auf 59° C aufgeheizt. Nach einem Umsatz von 40% wurden 5,5 Teile Polybutylacrylat (50gew.-%ige wäßrige Dispersion) zugesetzt. Man polymerisierte bis zu einem Druckabfall von 0,5 bar und dosierte dann 30 Teile Vinylchlorid nach. Nachdem der Druck um 1 bar abgefallen war, wurden noch 0,5 Teile Bisphenol A in den Autoklaven zugegeben, der Autoklav entspannt und in der im Beispiel 1 beschriebenen Weise aufgearbeitet. Der im Schleuderwasser auftretende Rückstand war sehr gering, die Verteilung der Zusatzstoffe im Polymeren sehr gut.

**0 078 043**

## Beispiel 8 (Vergleich)

Im Autoklaven wurden 100 Teile Wasser, 0,25 Teile Methylzellulose, 0,048 Teile Dilauroylperoxid, 0,05 Teile Dicyclohexylperoxidicarbonat, 1 Teil epoxidiertes Sojabohnenöl und 1 Teil Wachsester vorgelegt. Unter Rühren wurden dann 7 Teile Kreide, 4 Teile Titandioxid und 3 Teile Barium-Cadmium-myristinat, dispergiert in 90 Teilen Wasser, zugefügt. Nach dem Evakuieren und Spülen des Autoklaven wurden 120 Teile Vinylchlorid eingeleitet, die Reaktionsmischung auf 59°C aufgeheizt, bis zu einem Druckabfall von 1,0 bar polymerisiert, 0,5 Teile Bisphenol A zudosiert und in üblicher Weise aufgearbeitet. Im Abwasser wurde wiederum eine beträchtliche Menge an Additiven gefunden, die Dispergierung der Zusatzstoffe im Produkt war ungenügend.

## Beispiel 9

Beispiel 8 wurde wiederholt mit den Abänderungen, daß als Suspendierhilfsmittel 0,2 Teile Polyvinylalkohol (Viskosität 5 mPas, Verseifungzahl 270) und 0,04 Teile Methylzellulose eingesetzt wurden, daß 80 Teile VC vorgelegt wurden, daß zunächst bis zu einem Druckabfall von 0,5 bar polymerisiert wurde und daß dann anschließend 40 Teile Vinylchlorid dosiert wurden. Das Abwasser war nahezu rückstandsfrei, die Verteilung der Zusatzstoffe sehr gut.

In allen Beispielen herrschte nach der Vorlage des VC bis zum Druckabfall der autogene Sättigungsdruck der Monomerenphase.

Tabelle

| Beispiel | Rückstand (g/l) | Cl-Wert (Gew.-%) | Porosität (cm³/g) | Schütt-dichte (g/l) | Stabilität (min) | Ober-flächen-qualität |
|---|---|---|---|---|---|---|
| 1 (Vergleich) | 3,06 | 48,3 | 0,070 | 700 | 30 | — |
| 2 | 0,70 | 45,3 | 0,070 | 690 | 45 | + |
| 3 | 0,42 | 44,0 | 0,215 | 620 | 95 | + + |
| 4 | 0,29 | 44,0 | 0,170 | 670 | 90 | + + |
| 5 (Vergleich) | 5,50 | 46,9 | 0,075 | 680 | 40 | + |
| 6 | 0,23 | 44,0 | 0,075 | 630 | 60 | + + + |
| 7 | 0,13 | 43,4 | 0,020 | 720 | 65 | + |
| 8 (Vergleich) | 1,12 | 51,4 | 0,180 | 640 | 55 | + |
| 9 | 0,08 | 49,4 | 0,120 | 690 | 60 | + + |

## Patentansprüche

1. Verfahren zur Herstellung von verarbeitungsfertigen Polymermassen auf der Basis von Vinylchlorid-homo-, co- und/oder -pfropfcopolymeren durch Polymerisation von Vinylchlorid oder von im wesentlichen Vinylchlorid enthaltenden Monomergemischen in wäßriger Suspension mittels monomerlöslichem Radikalinitiator in Gegenwart von Suspensionsstabilisator, sowie Verarbeitungshilfe, Polymerstabilisator, Gleitmittel, Füllstoffe, Pigment- und/oder Modifizierungsmittel, dadurch gekennzeichnet, daß 50 bis 90 Gew.-% des Monomeren(gemisches) in der wäßrigen Phase in Gegenwart von Suspensionsstabilisator und mindestens einem der Additive bei einem Druck, der bei oder über dem Sättigungsdruck der Monomerenphase liegt, bis zu einem Druckabfall auf 0,1 bis 1 bar unterhalb dieses Sättigungsdruckes polymerisiert, dann unter Dosierung von 10 bis 50 Gew.-% des Monomeren(gemisches) im Maße seines Verbrauches zu Ende polymerisiert und die Masse isoliert wird.

2. Verfahren nach Anspruch 1, dadurch gekennzeichnet, daß in Gegenwart von Schlagzähmodifier polymerisiert wird.

3. Verfahren nach Anspruch 1 oder 2, dadurch gekennzeichnet, daß zusätzlich zu primärem Schutzkolloid sekundäres Schutzkolloid und/oder nichtionogenes Tensid eingesetzt wird.

7

**0 078 043**

4. Verfahren nach einem der Ansprüche 1 bis 3, dadurch gekennzeichnet, daß die Zugabe von Additiven beendet ist, bevor der Druck unter den Sättigungsdruck abfällt.

5. Verwendung der nach einem der vorangehenden Ansprüche hergestellten Polymermassen zur Herstellung von Formkörpern, insbesondere zur Extrusion.

## Claims

1. Process for the manufacture of polymer compositions ready for processing and based on vinyl chloride homopolymers, copolymers and/or graft copolymers by the polymerisation of vinyl chloride or monomer mixtures consisting mainly of vinyl chloride, in aqueous suspension, by means of a monomer-soluble radical initiator, in the presence of a suspension stabiliser and of a processing auxiliary, a polymer stabiliser, a slip agent, a filler, a pigment and/or a modifying agent, characterised in that from 50 to 90% by weight of the monomer (mixture) is polymerised in the aqueous phase in the presence of a suspension stabiliser and of at least one of the additives under a pressure which is at or above the saturation pressure of the monomer phase, until the pressure falls to from 0.1 to 1 bar below the said saturation pressure, and polymerisation of the monomer (mixture) is completed by the metered addition of from 10 to 50% by weight of the monomer (mixture) at the rate at which it is consumed, and the composition is separated off.

2. Process according to claim 1, characterised in that polymerisation is effected in the presence of agents that modify the impact strength.

3. Process according to claim 1 or 2, characterised in that, in addition to the primary protective colloid, a secondary protective colloid and/or a non-ionic tenside is used.

4. Process according to any one of claims 1 to 3, characterised in that the addition of additives is completed before the pressure falls to below the saturation pressure.

5. Une of the polymer compositions manufactured according to any one of the preceding claims for the manufacture of moulded articles, especially for extrusion.

## Revendications

1. Procédé pour préparer des compositions de polymères prêtes à être mises en œuvre, à base d'homopolymères, de copolymères et/ou de copolymères greffés du chlorure de vinyle, par polymérisation du chlorure de vinyle ou de mélanges de monomères contenant essentiellement du chlorure de vinyle, en suspension aqueuse, au moyen d'un amorceur radicalaire soluble dans le monomère et en présence d'un stabilisant de suspension, d'un adjuvant de mise en œuvre, d'un stabilisant pour le polymère, d'un lubrifiant, d'une charge, d'un pigment et/ou d'un agent modificateur, procédé caractérisé en ce qu'on polymérise de 50 à 90% en poids du monomère ou du mélange de monomères dans la phase aqueuse en présence d'un stabilisant de suspension et d'au moins un des additifs, sous pression égale ou supérieure à la pression de saturation de la phase monomère, jusqu'à ce que la pression soit tombée à une valeur inférieure de 0,1 à 1 bar à cette pression de saturation, puis on achève la polymérisation tout en introduisant progressivement de 10 à 50% en poids du monomère ou du mélange de monomères au fur et à mesure qu'il est consommé, et on isole la composition.

2. Procédé selon la revendication 1 caractérisé en ce qu'on polymérise en présence d'un modificateur de résilience.

3. Procédé selon l'une des revendications 1 et 2, caractérisé en ce qu'on utilise, en plus du colloïde protecteur primaire, un colloïde protecteur secondaire et/ou un surfactif non ionogène.

4. Procédé selon l'une quelconque des revendications 1 à 3, caractérisé en ce que l'apport des additifs est terminé avant que la pression soit tombée au-dessous de la pression de saturation.

5. Application des compositions à base de polymères qui ont été préparées selon l'une quelconque des revendications précédentes à la fabrication d'objets moulés, plus particulièrement par extrusion.